# EUROPEAN PATENT SPECIFICATION

(11) **EP 2 647 862 B1**
(45) Date of publication and mention of the grant of the patent: **03.01.2018**
(21) Application number: 11844022.1
(22) Date of filing: 28.11.2011
(51) Int. Cl.: F16D 65/12, F16D 65/00, C22C 49/00, C04B 35/573

(54) **METHOD FOR MANUFACTURING A CARBON-CERAMIC BRAKE DISK**
HERSTELLUNGSVERFAHREN FÜR EINE KOHLENSTOFF-KERAMIK-BREMSSCHEIBE
PROCÉDÉ POUR LA FABRICATION D'UN DISQUE DE FREIN EN CARBONE-CÉRAMIQUE

(30) Priority: 29.11.2010 KR 20100119592
(43) Date of publication of application: 09.10.2013
(73) Proprietor: Dacc Carbon, Jeonju-si, Jeollabuk-do (KR)
(72) Inventor: KANG, Jungsuk, Jeonju-si Jeollabuk-do 561-757 (KR); SHIN, Hyunkyu, Changwon-si Gyeongsangnam-do 641- 936 (KR); CHOI, Yeonho, Jeonju-si Jeollabuk-do 561-192 (KR); LEE, Junsang, Seoul 135-080 (KR); CHO, Chaewook, Daejeon 305-251 (KR); IM, Dongwon, Gimhae-si Gyeongsangnam-do 621-800 (KR); CHEA, Byunggun, Jeonju-si Jeollabuk-do 561-232 (KR); CHOI, Moonsoo, Jeonju-si Jeollabuk-do 561-231 (KR)
(74) Representative: Vossius & Partner Patentanwälte Rechtsanwälte mbB
(86) International application number: PCT/KR2011/009126
(87) International publication number: WO 2012/074258

(56) References cited:
- EP-A1- 1 620 657
- EP-B2- 0 788 468
- WO-A1-02/27208
- WO-A1-02/33285
- JP-A- H10 507 732
- JP-A- 2002 502 480
- US-A1- 2004 035 657
- US-A1- 2004 035 658
- US-B1- 6 517 756
- US-B1- 6 666 310

## Description

### [Technical Field]

The present invention relates to a method for manufacturing a carbon-ceramic brake disk.

### [Background Art]

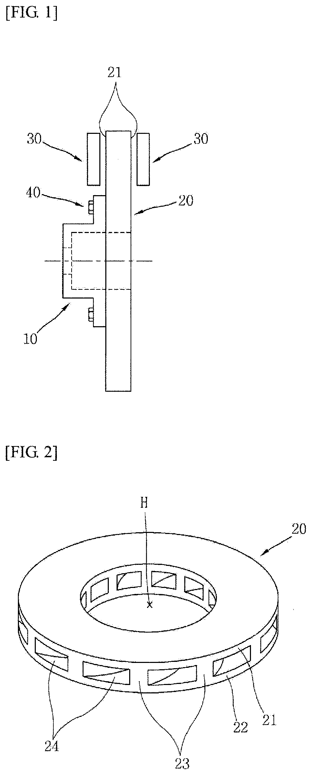

A brake system for a vehicle, as shown in FIG. 1, includes a hat part (also, referred to as a hub) 10 connected to a shaft of a vehicle, a brake disk 20 coupled to the hat part 10, a brake pad (also, referred to as a lining) 30 positioned at a position adjacent a friction surface 21 of the brake disk 20 so as to selectively press the friction surface 21 of the brake disk 20. The hat part 10 is coupled to the brake disk 20 by a coupling means 40.

In operation of the brake system, when the brake pads 30 press the friction surfaces of the brake disk 20 rotating, a friction force is generated between the pads 30 and the friction surfaces of the brake disk 20. By the friction force, the rotation speed of the brake disk 20 is reduced, and the brake disk 20 is stopped. Therefore, a vehicle having the brake system is decelerated and the vehicle is stopped, by operating of the brake system.

Recently, drivers have many chances to drive vehicles in high speed because many high ways are constructed. Also, for convenience and safety of a driver, a vehicle provides more and more components. Therefore, the weight of the vehicle is increased continuously. Accordingly, the vehicle is required a brake disk 20 and brake pads 30 more efficiently than before so that the heavy vehicle running in high speed is stopped.

For reason above, the brake disk 20 and the brake pads 30 are made of a carbon fiber-reinforced ceramic composite being light and having wear resistance and heat resistance.

A carbon-fiber-reinforced ceramic material is material that matrix is ceramic and reinforced as carbon fibers. Hereinafter, a carbon-ceramic brake disk is a brake disk made of carbon-fiber-reinforced ceramic material.

On the other hand, the hat part is usually made of a stainless steel. The coupling means usually includes bolt and nut, the bolt and nut are made of a stainless steel, respectively.

In the brake system, when the brake pads 30 press on the friction surfaces of the brake disk 30, and thus braking force is generated on the brake disk 20, frictional heat of high temperature is generated at the brake disk 20 and the brake pads 30.

If the frictional heat of high temperature generated at the brake disk 20 is not efficiently dissipated outside, the bake disk 20 or the hat part 10 is distorted because of difference of thermal expansion coefficient between the brake disk 20 and the hat part 10.

As a method for dissipating heat generated in the brake disk 20 to the outside, a plurality of cooling channels is provided at the brake disk, which penetrates a portion between inner circumference and outer circumference of the brake disk, respectively.

FIG.2 is a perspective view of a carbon-ceramic brake disk provided cooling channels.

As shown in FIG.2, the carbon-ceramic brake disk includes two disk portions 21, 22 positioned at a regular interval to each other, a plurality of connection portions 23 connecting the two disk portions 21, 22, a plurality of cooling channels 24 formed between the connection portions 24. Each of the two disk portions 21, 22 is formed as ring shape having a through hole H at center portion thereof, and the cooling channels 24 are formed in radial direction of the two disk portions 21, 22.

When the carbon-ceramic brake disk rotates, air inflows into the through holes of the two disk portions 21, 22 and passes the cooling channels 24 and outflows toward the outer circumference side of the two disk portions 21, 22. Friction heat is dissipated outside while the air passes the cooling channels 24.

A prior method of manufacturing the carbon-ceramic brake disk 20 provided the cooling channels 24 will be described as follows.

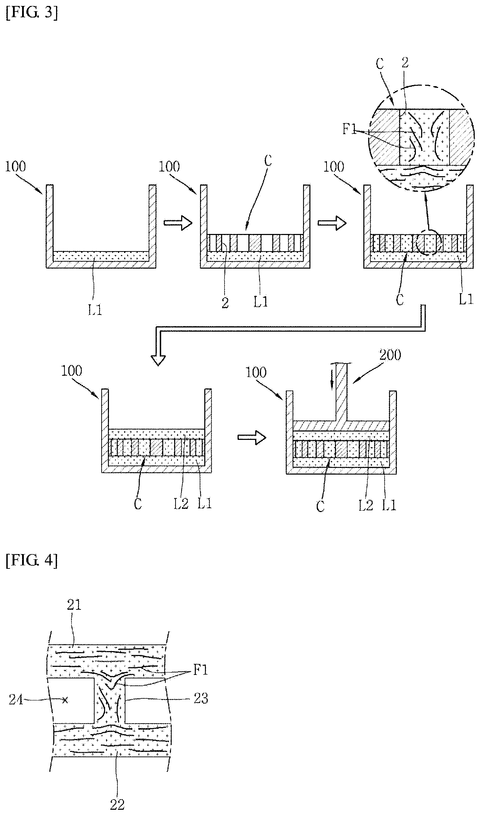

As shown in FIG. 3, a first layer L1 is formed by filling a mixture including long fibers and phenol resin into a mold 100. The mold 100 is a shape as a hollow cylindrical body, one end of which is blocked.

A core C provided a plurality of through holes 2 is inserted in the mold 100 to be positioned on the first layer L1. The core C, which is a disk having a uniform thickness, has the through holes 2 which are through upper surface and lower surface of the disk. Each of the through holes 2 has a uniformed width and length, and the through holes 2 are positioned in radial direction.

The mixture including long fibers and phenol resin is filled in each of the through holes 2 of the core C.

A second layer L2 is formed on the core C by filling the mixture including long fibers and phenol resin into the mold 100.

The first layer L1, the core C, and the second layer L2 in the mold 100 are pressed and heated to form a pressed body, and the molded body is separated from the mold 100. The molded body is inserted inside a furnace and then is pyrolysed under a high temperature to form a preform.

The temperature for pyrolyzing the molded body is within a range of 1200°C to 2000°C. During which process, the core C in the molded body melts and the core C is removed from the molded body. As a result, in the molded body, the part from which the core C is removed by such a melting becomes cooling channels 24 and the mixture filled in the through holes 2 of the core C becomes connection portions 23 which connect the first layer L1 and the second layer L2 in the final product. In final product, each of the first layer L1 and the second layer L2 becomes the disk portion.

The preform is machined.

A step infiltrating the preform with a molten silicon is proceeded. Since melting temperature of the silicon is within a range of 1400°C to 2000°C, under the melting temperature, the silicon melts and then is infiltrated into the preform. After processing such an infiltration step, the preform infiltrated with the silicone thus obtained is cooled.

During infiltrating the preform with the molten silicon, the silicon combines the preform, which is a carbon, to form a silicon carbide, and the silicon, which is not combined with the preform, is filled inside the preform.

The preform which is combined with the molten silicon becomes a carbon-ceramic brake disk that a matrix is carbon carbide, that is, ceramic, and the carbon fibers have a reinforcing effect on the surrounding carbon carbide matrix.

However, the carbon-ceramic brake disk manufactured as a prior method has a problem that the mixture including long fibers is not filled into each of narrow through holes 2 of the core C fully since the mixture includes long fibers and the mixture including the long fibers is filled into the through holes of the core C. Especially, for improving a cooling efficiency of the carbon-ceramic brake disk, the width of the connection portion 23 is getting narrow and the shape of the connection portion 23 is getting complex. Therefore, the mixture including long fibers is not filled more and more into the through holes of the core C fully. For this reason, as shown in FIG. 4, the density of the connection portion 23 is low and the strength of the connection portion 23 get weak. Also, efficiency of the heat transfer of the connection portion 23 get low because of the low density of the connection portion 23, therefore, frictional heat generated in braking operation is not efficiently dissipated through the cooling channels 24.

US 2004/0035658 A1 relates to a method for producing ceramic brake disks from a green body consisting of a sheet moulding compound (SMC) having reinforcing fibres, and the ensuing pyrolysis and melt infiltration.

EP 0 788 468 B2 discloses a method for the manufacture of a brake or clutch body, in which a porous carbon body is prepared which corresponds approximately to the final contour of the friction unit wherein the pores of this carbon body are infiltrated with fluid silicon, and the body is ceramicized by introducing a chemical reaction with the formation of silicon carbide.

EP 1 620 657 A1 relates to a core assembly for the manufacture of a brake disc provided with two rotor plates separated by ventilation ducts and a process for obtaining a brake disc using the said core assembly.

US 6,666,310 B1 discloses a fibre-reinforced ceramic body and a method for producing the same, in particular a brake disc of fibre-reinforced ceramic material and a method for producing the same.

### [Detailed Description of the Invention]

### [Technical Problem]

An object of the present invention is to improve structural strength of a connection portion connecting two disk portions and to improve an efficiency of the heat transfer of the connection portion.

### [Technical Solution]

The above object of the present invention is achieved by the invention defined in claim 1.

There is provided a carbon-ceramic brake disk including a first disk portion, a second disk portion positioned at a predetermined distance from the first disk portion, a plurality of connection portions connecting the first disk portion and the second disk portion, a plurality of cooling channels formed between the connection portions, wherein each of the first disk portion and the second disk portion includes long fibers, and wherein the connection portion includes short fibers.

The long fiber may have a length of from 11mm to 50mm.

The short fiber may have a length of between from 1mm to 10mm.

A part of the long fiber adjacent to the connection portion may be bent toward the connection portion.

Each of the short fiber and the long fiber may be a carbon fiber.

Also, in order to achieve the object of the present invention, there is provided an method for manufacturing a carbon-ceramic including forming a first layer in a mold by filling a mixture including long fibers into the mold, inserting a core which has a plurality of through holes into the mold so as to be positioned on the first layer, filling a mixture including short fibers into the through holes of the core, forming a second layer on the core by filling a mixture including long fibers into the mold: and pressure-heating the first layer, the core, and the second layer in the mold.

The core may includes a first disk core provided a plurality of through holes, and a second disk core and a third disk core which are lower than the first disk core in strength and melting temperature, which are formed in the same shape as the first disk core, wherein the second disk core is attached to one side of the first disk core and the third disk core is attached to the other side of the first disk core.

### [Advantageous Effect]

The present invention improves the strength of the connection portions which connect two disk portions and improves efficiency of the heat transfer of the connection portion. Therefore, the frictional heat generated in braking operating is efficiently dissipated outside. As a result, it is possible to prevent the thermal distortion of a hot part and a brake disk.

Also, the present invention provides advantages that it is easy to fill a mixture into each of the through holes of the core since the mixture including short fibers is filled into each of through holes forming the connection portion, and the mixture can be densely filled into each of the through holes.

### [Description of Drawing]

FIG. 1 is a side view of a conventional brake system;
FIG. 2 is a perspective view of a carbon-ceramic brake disk making up the conventional brake system.
FIG. 3 is a view showing a prior carbon-ceramic brake disk manufacturing method, sequentially;
FIG. 4 is a cross-sectional view enlargedly showing a disk portion and a connection portion making up the carbon-ceramic brake disk;
FIG. 5 is a perspective view of a carbon-ceramic brake disk according to the present invention;
FIG. 6 is an enlarged cross-sectional view of a connection portion and disk portion making up the carbon-ceramic brake disk;
FIG. 7 is a view showing a carbon-ceramic brake disk manufacturing method according to the present invention, sequentially; and
FIG. 8 is a cross-sectional view of a core used in a carbon-ceramic brake disk manufacturing method according to the present invention.

### [Embodiments for Carrying Out the Invention]

Referring to the accompanying drawings, a carbon-ceramic brake disk is described as follows.

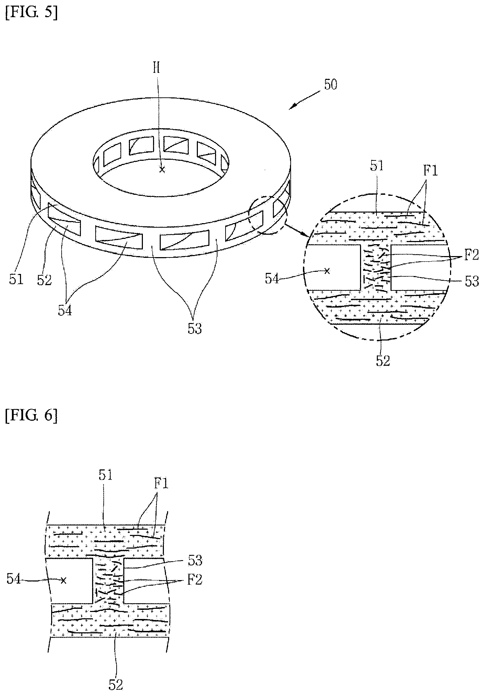

FIG. 5 is a perspective view of a carbon-ceramic brake disk.

As shown in FIG. 5, the carbon-ceramic brake disk includes a first disk portion 51, a second disk portion 52 positioned at a predetermined distance from the first disk portion 51, a plurality of connection portion 53 connecting the first disk portion 51 and the second disk portion 52, a plurality of cooling channels 54 formed between the connection portions 53, wherein each of the first and second disk portions 51 and 52 includes long fibers F1, and wherein the connection portion 53 includes short fibers F2.

Each of the first and second disk portions 51 and 52 is a disk as a ring shape, which has a uniform thickness and a central hole H pierced at the center.

One end of the connection portion 53 is connected to one side face of the first connection portion 51, and the other end of the connection portion 53 is connected to one side face of the second connection portion 52. In the first and second disk portions 51 and 52, an inner surface is the surface to which the connection portion 53 is connected, and an outer surface is an opposite surface of the inner surface.

A frictional layer may be formed at each of the first and second disk portions 51 and 52, as a uniform thickness from the outer surface into the inner portion. In case of forming the frictional layer at each of the first and second disk portions 51 and 52, the other part except the frictional layer is a support layer. The support layer may be preferably made of a material to have durability, and the frictional layer may be preferably made of a material to have wear resistance and heat resistance.

The support layer includes long fibers F1, silicon carbide, and silicon, etc., and the frictional layer includes silicon carbide, and silicon, etc. Each of the support layer and the frictional layer may include short fiber F2. The short fiber F2 may be a carbon fiber.

The long fiber F1 may have a length of from 11mm to 50mm. The long fiber F1 may be a carbon fiber. At least 60% or more of the long fibers F1 may be arranged in circumferential direction of the disk portion. As shown in FIG. 6, a part of the long fiber adjacent to the connection portion 53 may be bent toward the connection portion.

The first disk portion 51 and the second disk portion 52 keep a predetermined gap each other by the connection portions 53. The connection portions 53 may be arranged at regularly spaced interval. A horizontal section (which is parallel to the first disk portion and the second disk portion) shape of the connection portion 53 may have a uniform thickness (width) and a uniform length, wherein both end portion of the connection portion 53 may be formed as a curve. A horizontal section shape of the connection portion 53 can be formed variously.

The connection portion 53 includes short fibers. The short fiber F2 may have a length of from 1mm to 10mm. The short fiber F2 may be a carbon fiber.

The boundary part where is met with the connection portion 53 and the disk portion may include the short fibers F2 and the long fibers F1 as a mixed state, each other.

The space between the two connection portions 53 which are continuous with each other becomes a cooling channel 54. That is, the cooling channel 54 is formed by each inner surface of the two connection portions 53 and each the inner surface of the first and second disk portions 51 and 52. The cooling channel 54 is formed in radial direction of the first and second disk portions 51 and 52. Accordingly, when the carbon-ceramic brake disk 50 rotates, air inflows into the central hole H of the first and second disk portions 51 and 52 and passes the cooling channels 24 and outflows toward the outer circumference side of the first and second disk portions 51 and 52.

An embodiment of the method for manufacturing a carbon-ceramic brake disk according to the present invention is described as below.

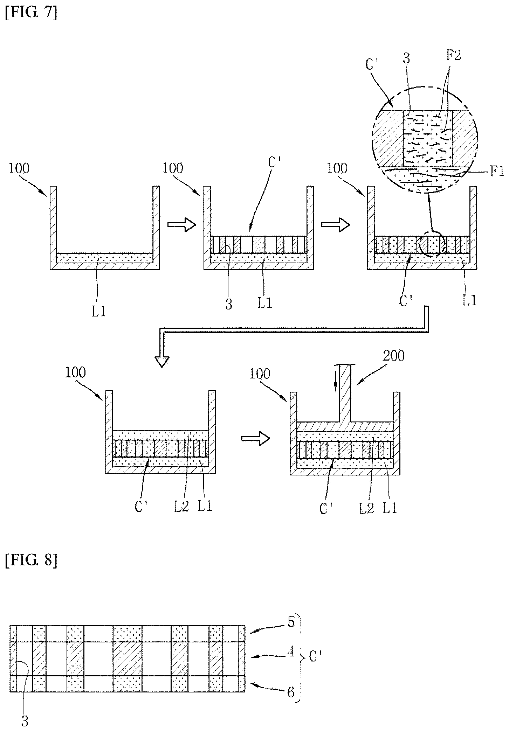

First of all, as shown in FIG. 7, a first layer L1 is formed by filling a first mixture including long fibers F1 into a mold 100. The mold 100 is a shape as a hollow cylindrical body, one end of which is blocked. The first mixture includes long fibers F1 and phenol resin. The long fiber F1 may be a carbon fiber. Short fibers F2 may be mixed to the first mixture, additionally.

A core C' is inserted in the mold 100 into so as to be positioned on the first layer L1.

As an example of the core C', the core C' is a disk shape provided a plurality of through holes 3. The disk shape has a uniform thickness, and each of the through holes 3 is formed to penetrate the disk shape from one side to other side. The shape and arrangement of the through holes 3 in the core C' are the same as the horizontal section shape of the connection portions 53 of the carbon-ceramic brake disk. The core C' may be a plastic material.

An embodiment of the core C' according to the present invention, as shown in FIG. 8, includes a first disk core 4 having a plurality of through holes 3, and a second disk core 5 and a third disk core 6 which are formed in the same shape as the first disk core, wherein the second disk core 5 is attached to one side of the first disk core 4 and the third disk core 6 is attached to the other side of the first disk core 4. The first disk core 4 has a uniform thickness. The through holes 3 of the first disk core 4 are formed as the same as shape of the connection portions 53 of the carbon-ceramic brake disk. The second and third disk core 5 and 6 may be a material which is lower than the first disk core 4 in strength and melting temperature. The first disk core 4 may be a plastic material, the second and third disk cores 5 and 6 may be a polystyrene material.

Hereinafter, the example of the core C' is explained, mainly.

A second mixture including short fibers F2 is filled in each of the through holes 3 of the core C'. The second mixture includes the short fibers F2 and phenol resin. The short fiber F2 may be a carbon fiber. The second mixture is densely filled in the through holes 3 of the core C' since the second mixture including short fibers F2 is filled in each of the through holes 3 of the core C'.

A second layer L2 is formed on the core C' by filling the first mixture into the mold 100.

The first layer L1, the core C', and the second layer L2 harden by pressure-heating the first layer L1, the core C', and the second layer L2 in the mold 100. That is, a cylinder type tool presses the first layer L1, the core C', and the second layer L2 in the mold 100, and at that time a heater provided at the mold heats the first layer L1, the core C', and the second layer L2 in the mold 100.

On other hand, in case the embodiment of the core C' is inserted in the mold 100, the first disk core 4 is not changed in shape and the second and third disk cores 5 and 6 shrink or melt. The second mixture which has been filled in each of the through holes of the second and third disk cores 5 and 6 is pressed and entered into each of the through holes 3 of the first disk core 4 since the second and third disk cores 5 and 6 shrink or melt. Therefore, Density of the second mixture filled in each of the through holes 3 of the first disk core 4 becomes high.

The molded body to harden in the mold 100 is separated from the mold 100.

The molded body is inserted inside a furnace and then is pyrolysed under a high temperature to form a preform. The temperature for pyrolysing the molded body is within a range of 1200°C and 2000°C. During which process, the core C' in the molded body melts and the core C' is removed from the molded body. Therefore, in the molded body, the part from which the core C is removed by such a melting becomes cooling channels 54, and the second mixture, in final product, filled in the through holes 3 of the core C' becomes connection portions 53 which connect the first and second layers L1 and L2. Also, in final product, each of the first and second layers L1 and L2 becomes the first disk portion 51 and the second disk portion 52.

The preform is machined.

A step infiltrating the preform with a molten silicon is proceeded. Since melting temperature of the silicon is within a range of 1400°C and 2000°C, under the melting temperature, the molten silicon melts and then is infiltrated into the preform. After processing such an infiltration step, the preform infiltrated with the silicone thus obtained is cooled.

During infiltrating the preform with the molten silicon, the silicon combines with the preform, which is a carbon, to form a silicon carbide (SiC), and the silicon (Si), which is not combined with the preform, is filled inside the preform.

The preform which is combined with the molten silicon becomes a carbon-ceramic brake disk that a matrix is carbon carbide, that is, ceramic, and the carbon fibers have a reinforcing effect on the surrounding carbon carbide matrix.

Operation of a carbon-ceramic brake disk manufactured by the method according to the present invention is described as below.

A carbon-ceramic brake disk manufactured by the method according to the present invention consists of a brake system, and brake pads of the brake system are pressed on the outer surface of the first disk portion 51 and the outer surface of the second disk portion 52, therefore, a vehicle having the brake system is decelerated and the vehicle is stopped.

A carbon-ceramic brake disk manufactured by the method according to the present invention provides an advantage that the density of the connection portion 53 is high because the connection portion 53 connecting the first disk portion 51 and the second disk portion 52 includes the short fibers F2. Especially, even if the width (thickness) of the connection portion 53 is narrow and the shape of the connection portion is complex, the density of connection portion 53 is high because of including the sort fibers. As a result, the strength of the connection portion is great, and for improving efficiency of dissipating heat, it is possible to make the width of the connection portion narrow and it is possible to make the structure of the connection portion complex and various. Efficiency of heat transfer is excellent because the density of the connection portion 53 is high. Therefore, frictional heat generated in braking operation is efficiently dissipated through the cooling channels 24. In addition, it is possible to prevent the connection portion from oxidizing by external air or foreign substance because the density of the connection portion 53 is high. Therefore, the strength of the connection portion 53 is kept.

As explained above, a carbon-ceramic brake disk manufactured by the method according to the present invention prevents the connection portion from destroying by external impact or high-speed running since the strength of the connection portion is great. Also, the present invention prevents the thermal distortion of hot part and brake disk since the frictional heat generated in braking operating is efficiently radiated outside.

A method for manufacturing a carbon-ceramic brake disk according to the present invention provides advantages that it is easy to fill a mixture into each of the through holes of the core since the mixture including short fibers is filled into each of through holes forming the connection portion, and the mixture can be densely filled into each of the through holes of the core.

## Claims

1. A method for manufacturing a carbon-ceramic brake disk, the method comprising:
forming a first layer in a mold by filling a mixture including long fibers into the mold;
inserting a core which has a plurality of through holes into the mold so as to be positioned on the first layer;
filling a mixture including short fibers into the through holes of the core;
forming a second layer on the core by filling a mixture including long fibers into the mold; and
pressure-heating the first layer, the core, and the second layer in the mold,
wherein the long fiber has a length of from 11 mm to 50 mm, and the short fiber has a length of from 1 mm to 10 mm,
wherein the core comprises a first disk core provided a plurality of through holes, and a second disk core which is lower than the first disk core in strength and melting temperature, wherein the second disk core is formed as the same as shape of the first disk core and is attached to one side of the first disk core, and
wherein the core further comprises a third disk core which is lower than the first disk core in strength and melting temperature, wherein the third disk core is formed as the same as shape of the first disk core and is attached to the other side of the first disk core.

## Patentansprüche

1. Verfahren zum Herstellen einer carbon-keramischen Bremsscheibe, wobei das Verfahren aufweist:
Bilden einer ersten Schicht in einer Form durch Füllen einer Mischung, die lange Fasern enthält, in die Form;
Einsetzen eines Kerns, der mehrere Durchgangslöcher aufweist, in die Form, so dass er auf der ersten Schicht angeordnet wird;
Füllen einer Mischung, die kurze Fasern enthält, in die Durchgangslöcher des Kerns;
Bilden einer zweiten Schicht auf dem Kern durch Füllen einer Mischung, die lange Fasern enthält, in die Form; und
Druckerhitzen der ersten Schicht, des Kerns und der zweiten Schicht in der Form,
wobei die lange Faser eine Länge von 11 mm bis 50 mm aufweist und die kurze Faser eine Länge von 1 mm bis 10 mm aufweist,
wobei der Kern einen ersten Scheibenkern, der mit mehreren Durchgangslöchern versehen ist, und einen zweiten Scheibenkern aufweist, der eine niedrigere Festigkeit und
Schmelztemperatur als der erste Scheibenkern aufweist, wobei der zweite Scheibenkern in derselben Form wie der erste Scheibenkern ausgebildet ist und an einer Seite des ersten Scheibenkerns angebracht ist, und
wobei der Kern ferner einen dritten Scheibenkern aufweist, der eine niedrigere Festigkeit und Schmelztemperatur als der erste Scheibenkern aufweist, wobei der dritte Scheibenkern in derselben Form wie der erste Scheibenkern ausgebildet ist und an die andere Seite des ersten Scheibenkerns angebracht ist.

## Revendications

1. Procédé de fabrication d'un disque de frein en carbone-céramique, ledit procédé comprenant :
la formation d'une première couche dans un moule par coulée dans le moule d'un mélange comprenant des fibres longues ;
l'insertion dans le moule d'un noyau présentant une pluralité de trous débouchants, de manière à positionner celui-ci sur la première couche ;
la coulée d'un mélange comprenant des fibres courtes dans les trous débouchants du noyau ;
la formation d'une deuxième couche sur le noyau par coulée dans le moule d'un mélange comprenant des fibres longues ; et
le chauffage sous pression de la première couche, du noyau et de la deuxième couche dans le moule,
où les fibres longues ont une longueur comprise entre 11 mm et 50 mm, et les fibres courtes ont une longueur comprise entre 1 mm et 10 mm,
où le noyau comprend un premier noyau de disque pourvu d'une pluralité de trous débouchants, et un deuxième noyau de disque dont la résistance et la température de fusion sont inférieures à celle du premier noyau de disque, le deuxième noyau de disque ayant la même forme que le premier noyau de disque et étant fixé sur un côté du premier noyau de disque, et
où le noyau comprend en outre un troisième noyau de disque dont la résistance et la température de fusion sont inférieures à celle du premier noyau de disque, le troisième noyau de disque ayant la même forme que le premier noyau de disque et étant fixé sur l'autre côté du premier noyau de disque.
